# EUROPEAN PATENT SPECIFICATION

(11) **EP 0 678 419 B1**
(45) Date of publication and mention of the grant of the patent: **29.09.1999**
(21) Application number: 95103833.0
(22) Date of filing: 16.03.1995
(51) Int. Cl.: B60N 3/14, B60Q 3/02

(54) **An automobile cigarette lighter**
Zigarettenzünder für Kraftfahrzeuge
Allume-cigares pour véhicules automobiles

(30) Priority: 23.03.1994 IT TO940212
(43) Date of publication of application: 25.10.1995
(73) Proprietor: CASCO IMOS ITALIA S.p.A., 10138 Torino (IT)
(72) Inventor: Martina, Felice, 10131 Torino (IT)
(74) Representative: Lotti, Giorgio

(56) References cited:
- EP-A- 0 511 089
- FR-A- 2 572 035
- FR-A- 2 595 132
- US-A- 4 713 733

## Description

### Field of the invention

The present invention falls within the field of automobile cigarette lighters. More particularly, the invention relates to a lighter of the kind comprising a substantially transparent body of tubular form that is inserted in a seat obtained in the vehicle's dashboard abutting a flange portion against it. The transparent flange remains in use on the outer side of the dashboard and is brightened by an inner bulb allowing the passengers to find the lighter's position easily also at night-time.

### Background of the invention

Tubular bodies of the said kind are known to be constructed in semi-transparent, coloured plastic material. However, illumination of the outer flange is never uniform, partly because of the position of the inner bulb. For several constructional and mounting reasons, the bulb is located at a side of the tubular body. Light emitted by the bulb has to go through paths of different lengths through the wall of the semi-transparent body, to reach all the zones of the outer flange. As a result, the zone of the flange nearest to the bulb is always brighter than the farthest zone. Besides this aesthetic inconvenience, a number of zones of shade and points of brightness appear randomly scattered on the outer flange due to lengthwise ribs and other structural non-continuous members provided on the surface of the transparent tubular body where light coming from the bulb is concentrated.

FR-A-2572035 discloses an automobile cigarette lighter as defined in the preamble of claim 1.

In particular, the aforementioned French patent discloses a cigarette lighter comprising a flange portion, and a thin layer covering the top of the flange portion, and applied to the flange portion by stamping, or pad printing, or screen-printing.

The cigarette lighter previously described presents some technical and economical inconveniences because of its exposed position: it is subject to wear and to tear, and because of its replacement is difficult and expensive.

### Summary of the invention

It is an object of the present invention to provide a cigarette lighter capable of overcoming the aforementioned inconveniences of the above prior art drawbacks. Particularly, it is an object of the present invention to provide a lighter such that its position may be indicated by a bright ring being illuminated uniformly in every point.

In accordance with one aspect of the invention as claimed, these objects are accomplished by the provision of an automobile cigarette lighter of the type comprising a body of substantially tubular shape inserted in the dashboard of the vehicle for seating a removable lighter and forming an outer flange portion appearing on the dashboard, the light emitted by an internal bulb being conveyed through the walls of tubular body to said flange portion, said body being of a colourless transparent material, said flange portion being outwardly covered by a translucent ring adapted for brightening uniformly with the light coming from said bulb through said transparent body; characterised in that said ring is applied to outer flange portion, and has a substantially L shaped axial cross section comprising a flat front portion and a substantially cylindrical or slightly frusto conical side portion, respectively adapted for covering the front an the sides of said flange portion.

### Brief description of the drawings

In order that the present invention may be well understood there will now be described a few preferred embodiments thereof, given by the way of example, reference being made to the accompanying drawings, in which:
FIG. 1 is an axial lengthwise section view of a cigarette lighter of the invention;
FIG. 2 depicts a detail of FIG. 1 to an enlarged scale; and
FIG. 3 is an axial sectional view similar to FIG. 2, of a variant embodiment of the cigarette lighter according to the invention.

### Detailed description of preferred embodiments

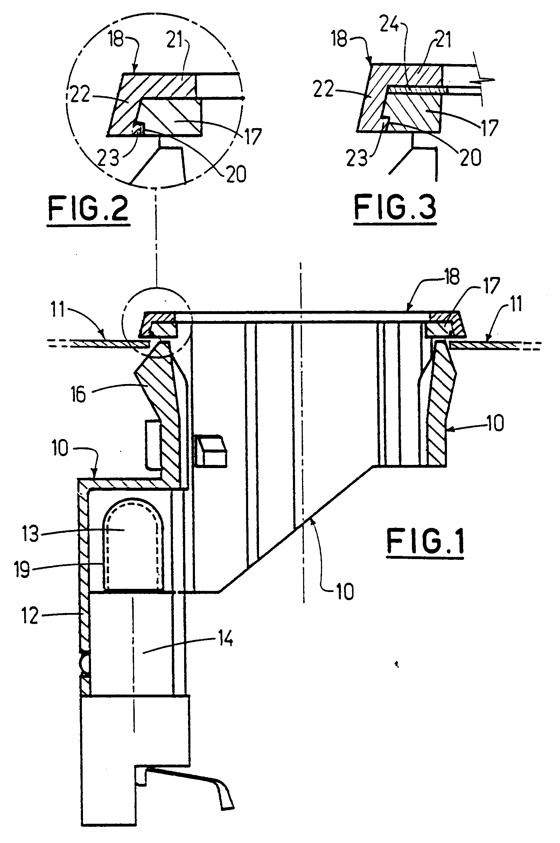

With reference initially to FIG. 1, numeral 10 designates a transparent tubular body, of substantially cylindrical shape, for inserting in a suitable seat obtained in the dashboard 11 of an automobile. Tubular body 10 receives a conventional removable lighter, not shown for simplicity. The lower portion of tubular body 10 forms a hollow side appendix 12 which houses a bulb 13 and relevant bulb socket 14, of known kinds and not described in detail herein.

Like conventional devices, tubular body 10 is formed by a plurality of structural and functional longitudinally disposed ribs and splines 15 prevailingly arranged on its inner surface. FIG. 1 further illustrates conventional resilient tongues 16 for retaining tubular body 10 within the dashboard.

Still referring to FIG. 1, tubular body 10 is cut obliquely in order to improve transmission through its own walls of the light generated by the bulb 13 in the direction of its top, towards the outside of the dashboard where body 10 forms a flange portion 17. Flange portion 17 collects the light coming from inside and appears on the dashboard.

According to the present invention, a diffusion ring 18 of plastic opaque material is applied to the outer flange portion 17. Preferably, diffusion ring 18 is opacified by titanium dioxide particles which render it translucent.

Instead, tubular body 10 must be of colourless material as transparent as possible to distribute light with maximum intensity in all the sectors of flange 17. Preferably, tubular body 10 is constructed of polycarbonate, which is transparent and resistant to high temperature generated by the lighter.

Owing to the above features, light diffused by flange 17 is distributed uniformly within the translucent ring 18 so that the user may see a pleasant, uniform bright ring surrounding the lighter's knob (not shown for simplicity) on the dashboard. As is apparent, aesthetic inconveniences cited in the preamble of the description are avoided.

Ring 18 can be white or coloured with the same colour characterising the other accessory controls provided on the dashboard.

With an aim to further improve visual effect provided by ring 18, the latter can be made of a bright colour, clearly visible in the daytime and interpose a brightly coloured transparent body between ring 18 and the bulb 13. The colour of said brightly coloured transparent body would appear when the inner bulb is lit. For example, a coloured cap 19 can be fitted on the bulb as shown in FIG. 1, or insert a coloured sub-ring 24, as illustrated in FIG. 3. Alternatively, the same effect can be accomplished by applying a coat of coloured paint under ring 18, the colour of which will be visible only when the bulb is on.

As shown in the drawings, ring 18 is preferably so shaped as to cover the flange externally, covering it front and sideways. For this purpose, ring 18 has a substantially L-shaped lengthwise cross section, providing (FIG. 2) an outer flat front portion 21 and an adjacent side portion 22, of substantially cylindrical or slightly frustoconical shape for covering the front and the sides, respectively, of flange 17.

According to a preferred embodiment of the present invention, the diffusion ring 18 is fitted with hooking means providing quick mounting to the flange 17 of transparent body 10. This possibility, shown in detail in FIG. 2, is attained for example obtaining a circumferential groove 20 on the periphery of flange 17. A corresponding projection 23 extending from side portion 22 of ring 18 snap-fits into groove 20. According to a further preferred embodiment of the present invention, the opaque ring 18 is coloured with the same colours of the symbols appearing on the dashboard.

## Claims

1. An automobile cigarette lighter of the type comprising a body (10) of substantially tubular shape inserted in the dashboard (11) of the vehicle for seating a removable lighter and forming an outer flange portion (17) appearing on the dashboard, the light emitted by an internal bulb (13) being conveyed through the walls of tubular body (10) to said flange portion (17), said body (10) being of a colourless transparent material, said flange portion (17) being outwardly covered by a translucent ring (18) adapted for brightening uniformly with the light coming from said bulb (13) through said transparent body (10, 17); characterised in that said ring (18) is applied to outer flange portion (17), and has a substantially L shaped axial cross section comprising a flat front portion (21) and a substantially cylindrical or slightly frusto conical side portion (22), respectively adapted for covering the front an the sides of said flange portion (17).

2. A cigarette lighter according to claim 1, characterised in that said ring (18) is provided with quick coupling means (23) for hooking to said flange portion (17).

3. A cigarette lighter according to claim 1, characterised in that said tubular body (10) is made of transparent, colourless polycarbonate.

4. A cigarette lighter according to claim 1, characterised in that said ring (18) is made of plastic material opaque with titanium dioxide particles.

5. A cigarette lighter according to claim 1, characterised in that it comprises a transparent body with a coloured surface interposed between said ring (18) and said bulb (13).

6. A cigarette lighter according to claim 5, characterised in that said transparent body consists of a coloured sub-ring (24) comprised between said ring (18) and said flange portion (17).

7. A cigarette lighter according to claim 5, characterised in that said transparent body consists of a coloured cap covering the bulb (13).

8. A cigarette lighter according to claim 1, characterised in that it comprises a layer of coloured paint between said ring (18) and said flange portion (17).

9. A cigarette lighter according to claim 1, characterized in that opaque ring (18) is coloured.

## Patentansprüche

1. Zigarettenanzünder für Kraftfahrzeuge, umfassend einen im wesentlichen röhrenförmigen Körper (10), der in das Armaturenbrett (11) des Fahrzeugs zur Aufnahme eines entnehmbaren Anzünders eingeführt ist und einen äußeren Flanschabschnitt (17) bildet, der auf dem Armaturenbrett erscheint, wobei das von einer innenliegenden Glühbirne (13) ausgesandte Licht durch die Wände des röhrenförmigen Körpers (10) zum Flanschabschnitt (17) transportiert wird, der Körper (10) aus einem farblosen durchsichtigen Material besteht und der Flanschabschnitt (17) an seiner Außenseite mit einem durchscheinenden Ring (18) bedeckt ist, der einheitlich aufleuchtet, wenn das Licht von der Glühbirne (13) durch den durchsichtigen Körper (10; 17) kommt,
dadurch gekennzeichnet,
daß der Ring (18) an dem außenliegenden Flanschabschnitt (17) angebracht ist und einen im wesentlichen L-förmigen axialen Querschnitt mit einem flachen vorderen Abschnitt (21) und einem im wesentlichen zylindrischen oder leicht kegelstumpfförmigen Seitenabschnitt (22) aufweist, die jeweils zur Abdeckung der Vorderseite und der Seiten des Flanschabschnitts (17) geeignet sind.

2. Zigarettenanzünder nach Anspruch 1,
dadurch gekennzeichnet,
daß der Ring (18) mit Schnellverbindungsmitteln (23) zum Einhaken an dem Flanschabschnitt (17) ausgestattet ist.

3. Zigarettenanzünder nach Anspruch 1,
dadurch gekennzeichnet,
daß der röhrenförmige Körper (10) aus durchsichtigem, farblosen Polycarbonat hergestellt ist.

4. Zigarettenanzünder nach Anspruch 1
dadurch gekennzeichnet,
daß der Ring (18) aus Kunststoffmaterial bedeckt mit Titandioxidpartikeln besteht.

5. Zigarettenanzünder nach Anspruch 1,
dadurch gekennzeichnet,
daß er einen durchsichtigen Körper mit einer bunten Oberfläche zwischen Ring (18) und Glühbirne (13) umfaßt.

6. Zigarettenanzünder nach Anspruch 5,
dadurch gekennzeichnet,
daß der durchsichtige Körper aus einem bunten Unterring (24) besteht, der zwischen dem Ring (18) und dem Flanschabschnitt (17) angeordnet ist.

7. Zigarettenanzünder nach Anspruch 5,
dadurch gekennzeichnet,
daß der durchsichtige Körper aus einer bunten Kappe besteht, die die Glühbirne (13) bedeckt.

8. Zigarettenanzünder nach Anspruch 1,
dadurch gekennzeichnet,
daß er eine Schicht bunter Farbe zwischen dem Ring (18) und dem Flanschabschnitt (17) umfaßt.

9. Zigarettenanzünder nach Anspruch 1,
dadurch gekennzeichnet,
daß der undurchsichtige Ring (18) bunt ist.

## Revendications

1. Allume-cigare pour véhicules automobiles, du type qui comprend un corps (10) de configuration sensiblement tubulaire inséré dans le tableau de bord (11) du véhicule pour loger un allume-cigare amovible et pour former une partie de bride extérieure (17) qui apparaît sur le tableau de bord, la lumière émise par une ampoule interne (13) étant transportée à travers les parois du corps tubulaire (10) vers ladite partie de bride (17), ledit corps (10) étant en matière transparente incolore, ladite partie de bride (17) étant couverte du côté extérieur par une bague translucide (18) apte à luire uniformément sous l'effet de la lumière provenant de ladite ampoule (13) à travers ledit corps transparent (10, 17); caractérisé en ce que ladite bague (18) est appliquée sur une partie (17) de bride extérieure et présente une section axiale sensiblement en forme de L, comprenant une partie frontale plate (21) et une partie latérale sensiblement cylindrique ou légèrement tronconique (22), respectivement aptes à couvrir la partie frontale et les côtés de ladite partie de bride (17).

2. Allume-cigare selon la revendication 1, caractérisé en ce que ladite bague (18) comporte un moyen d'accouplement rapide (23) pour s'accrocher à ladite partie de bride (17).

3. Allume-cigare selon la revendication 1, caractérisé en ce que ledit corps tubulaire (10) est en polycarbonate transparent incolore.

4. Allume-cigare selon la revendication 1, caractérisé en ce que ladite bague (18) consiste en une matière plastique opaque à particules de dioxyde de titane.

5. Allume-cigare selon la revendication 1, caractérisé en ce qu'il comprend un corps transparent pourvu d'une surface colorée interposée entre ladite bague (18) et ladite ampoule (13).

6. Allume-cigare selon la revendication 5, caractérisé en ce que ledit corps transparent consiste en une sous-bague colorée (24) comprise entre ladite bague (18) et ladite partie de bride (17).

7. Allume-cigare selon la revendication 5, caractérisé en ce que ledit corps transparent consiste en un capuchon coloré qui couvre l'ampoule (13).

8. Allume-cigare selon la revendication 1, caractérisé en ce qu'il comprend une couche de peinture colorée entre ladite bague (18) et ladite partie de bride (17).

9. Allume-cigare selon la revendication 1, caractérisé en ce que la bague opaque (18) est colorée.
